# EUROPÄISCHE PATENTSCHRIFT

(11) **EP 1 425 361 B1**
(45) Veröffentlichungstag und Bekanntmachung des Hinweises auf die Patenterteilung: **12.09.2007**
(21) Anmeldenummer: 02796203.4
(22) Anmeldetag: 30.07.2002
(51) Int. Cl.: C09J 7/02, C09J 153/00

(54) **OBERFLÄCHENSCHUTZFOLIE FÜR LACKIERTE FLÄCHEN MIT EINEM KLEBER AUF BASIS VON HYDRIERTEN BLOCKCOPOLYMEREN**
SURFACE PROTECTION FILM FOR PAINTED SURFACES WITH AN ADHESIVE BASED ON HYDROGENATED BLOCK COPOLYMERS
PELLICULE DE PROTECTION DE SURFACE DESTINEE A DES SURFACES VERNIES, COMPORTANT UN AGENT ADHESIF A BASE DE COPOLYMERES SEQUENCES HYDROGENES

(30) Priorität: 23.08.2001 DE 10141378
(43) Veröffentlichungstag der Anmeldung: 09.06.2004
(73) Patentinhaber: tesa AG, 20253 Hamburg (DE)
(72) Erfinder: KRAWINKEL, Thorsten, 22457 Hamburg (DE)
(86) Internationale Anmeldenummer: PCT/EP2002/008437
(87) Internationale Veröffentlichungsnummer: WO 2003/018701

(56) Entgegenhaltungen:
- EP-A- 0 519 278
- US-A- 5 705 551
- US-B1- 6 183 862
- DATABASE WPI Section Ch, Week 200216 Derwent Publications Ltd., London, GB; Class A18, AN 2002-117543 XP002226569 & JP 2001 279212 A (SEKISUI CHEM IND CO LTD), 10. Oktober 2001 (2001-10-10)

## Beschreibung

Die Erfindung betrifft eine selbstklebende Schutzfolie.zum Schutz von Oberflächen wie Glas, Keramik, VA-Stahl, Polycarbonat- oder Acrylglas, insbesondere von lackierten Oberflächen.

Für Oberflächenschutz auf unlackierten Flächen gibt es eine Vielzahl von Produkten. Demgegenüber werden lackierte Flächen, besonders in frischem, unausgehärtetem Zustand bisher nur selten mit selbstklebenden Schutzfolien abgedeckt.

Die Konservierung und der Schutz von Kraftfahrzeugen während des Transports vom Hersteller zum Händler wird schon seit geraumer Zeit praktiziert.

Die herkömmliche Methode der Konservierung von Automobilen ist das Auftragen von Paraffinwachsen in der Stärke von 5 bis 20 µm. Es hat sich aber gezeigt, dass insbesondere bei waagerecht liegenden Flachen der Fahrzeuge, wie Motorhaube. Dach und Kofferraumdeckel, eine derart dünne und zumeist ungleichmäßige Schicht gegen äußere Einflüsse, wie beispielsweise saurer Regen und die ätzende Wirkung von Vogelkot, nicht genügend Schutz bietet.

Ein erheblicher Nachteil der Paraffinwachsversiegelung ist zudem die notwendige Entkonservierung mittels Dampfstrahl, Tensiden oder Lösungsmitteln. Die umweltgerechte Rückgewinnung und Entsorgung der Rückstände verursachen einen großen apparativen Aufwand sowie sehr hohe Kosten.

Eine aktuelle Entwicklung auf dem Gebiet des Automobil-Transportschutzes ist der Einsatz von Hauben, die das gesamte Fahrzeug bedecken und durch Wärmeeinwirkung passgenau aufgeschrumpft werden.

Solche Haubenlösungen sind sehr kostspielig und erfordern großen Aufwand beim Anlegen der Haube, dem Aufschrumpfen und vor allem beim Einsteigen in den maskierten Wagen. Dafür sind eigens Reißverschlussöffnungen vorgesehen, die zeitraubend geöffnet und wieder verschlossen werden müssen. Die Sicht beim Rangieren ist stark beeinträchtigt, und es kommt durch eingeschlossenen Schmutz und durch unvermeidbares Scheuem auf dem Lack stellenweise zu Mattierungen. Diese Lösung hat sich bislang nicht durchsetzen können.

In den letzten Jahren werden statt dessen verstärkt temporär aufgebrachte selbstklebende Oberflächenschutzfolien angewendet. Diese sind speziell für den Transportschutz von frischen Kraftfahrzeugen vorgesehen und haben eine gegenüber den Wachsen deutlich verbesserte Schutzwirkung gegen mechanische und chemische Einflüsse sowie gegenüber den Hauben den Vorteil, kostengünstiger und deutlich schneller applizierbar zu sein.

Wesentliche Anforderungen an eine Oberflächenschutzfolie für KFZ-Lacke sind
- gute Schutzwirkung für den Lack gegen chemische und mechanische Einflüsse.
- Witterungsbeständigkeit über den gesamten Zeitraum der Transportkette vom Werk bis zum Händler, der je nach Entfernung etliche Monate betragen kann. So muss eine solche Folie auch nach langer intensiver Sonnenlichtexposition in einem Stück abziehbar sein und darf keine Klebmasserückstände auf dem Lack hinterlassen.
- ausreichende Anfangsklebrigkeit, um sich in schwierigen Verklebungsgeometrien nicht vorzeitig selbsttätig-abzulösen.
- ausgewogene Endklebkraft, damit die Folie einerseits sicher haftet (auch bei starkem Fahrtwind oder Regen), andererseits ohne großen Kraftaufwand oder gar Reißen entfernbar ist. Ideal wäre die gewünschte Verklebungsfestigkeit von Anfang an. In der Praxis ist die Haftung jedoch zunächst schwächer und nimmt dann mit der Zeit und besonders unter Temperatureinfluss zu. Dieses wird in der Fachsprache "Aufziehen" genannt.
- Lackverträglichkeit, was bedeutet, dass die Lackoberfläche nach Entfernen der Schutzfolie keinerlei Beeinträchtigungen in Form von Belägen oder Deformationen aufweisen soll. Deformationen sind Abdrücke im Lack, die sich einerseits als Konturen von Folienkante, eingeklebten Luftblasen und Falten, andererseits als Mattierungen unter der gesamten beklebten Fläche zeigen.
- hohe UV-Stabilität, damit die Klebmasse nicht unter Bewitterung zersetzt wird und entweder ihre Klebkraft verliert oder mit der Lackoberfläche reagiert.

Bei lackierten Oberflächen, die keiner Bewitterung ausgesetzt werden, zum Beispiel lackierte Möbel, muss auf die ausgezeichnete UV-Stabilität der Schutzfolie weniger Wert gelegt werden.

Gemäß dem Stand der Technik werden zur Abdeckung von Fahrzeuglacken als Folienmaterialien in der Regel Polyolefine oder Mischungen aus solchen, die üblicherweise mit Lichtschutzmitteln und Titandioxid abgemischt sind, verwendet.

Als Selbstklebemassen finden vielfältige Systeme Verwendung, die aber ausnahmslos mit Schwächen behaftet sind.

Selbstklebemassen auf Naturkautschukbasis haben eine relativ gute Anfangshaftung und lassen sich rückstandsfrei wieder abziehen. Diese Massen sind allerdings selbst bei kurzzeitiger Einwirkung von UV-Strahlung nicht alterungsstabil. Dies führt zu starken schmierigen oder lackartig verhärteten Rückständen auf dem Lack nach praxisüblichen Witterungsbeanspruchungen über einige Monate.

In US 5,612,136 A1 ist eine Schutzfolie mit einer Selbstklebemasse auf Acrylatbasis erwähnt. Polyacrylatmassen sind zwar sehr UV-stabil, unterwirft man aber unvernetzte-Polyacrylatmassen einer Wechselklimalagerung, so zeigen sie nur teilweise eine gute Verträglichkeit mit Lackoberflächen. Zudem zeigen die Polyacrylatmassen ein unerwünscht starkes Aufziehverhalten, d.h., das Entfernen der Folie nach einiger Zeit ist sehr kraftaufwendig. Sind diese Massen chemisch oder durch Strahlen stark vernetzt, lassen sie sich zwar leichter abziehen, verursachen aber auf der anderen Seite verstärkt deutlich sichtbare, bleibende Deformationen der Lackoberfläche.

Die in der DE 195 32 220 A1 dargelegte Klebefolie mit Polyethylenvinylacetat-Kleber (EVAc) besitzt deutlich bessere Haftungseigenschaften als die beiden oben beschriebenen Systeme. Schutzfolien mit EVAc-Massen erreichen bereits nach kurzer Zeit gute Verklebungswerte und gewährleisten eine große Verklebungssicherheit gegen unerwünschtes selbsttätiges Ablösen während des Transportes. Auf der anderen Seite gerät die Verklebungsfestigkeit beim Abziehen nach Gebrauch zum Nachteil, da der Kraftaufwand wie bei den Polyacrylatmassen deutlich zu hoch ist, wodurch die Klebefolie häufig nicht ohne Abrisse abgezogen werden kann. Die Beeinflussung der zu schützenden Lacke ist im allgemeinen gering. Besonders hervorzuheben ist die UV-Stabilität.

Selbstklebemassen auf Polyisobutylenbasis (Polyisobutylenhomopolymer oder Butylkautschuk) können zwar nach Lagerung wesentlich leichter wieder abgezogen werden, zeigen aber nach einer Wechselklimalagerung auf in der Automobilindustrie gebräuchlichen Lacken teilweise eine so geringe Haftfestigkeit, dass sie bei ruckartiger Beanspruchung, wie sie bei Flattern im Fahrtwind auftritt, die in der Praxis geforderte Verklebungsfestigkeit nicht immer ausreichend erreichen. Insbesondere bei Feuchtigkeitseinfluss ist die Haftfestigkeit häufig derart reduziert, dass sich die Folie während des Transports von den geschützten Fahrzeugen ablöst, so dass zum einen keine Schutzwirkung mehr besteht und zum anderen ein Sicherheitsrisiko vorliegt, wenn sie nachfolgenden Fahrzeugen auf die Windschutzscheibe weht.

Darüber hinaus weist diese Selbstklebemasse keine Verträglichkeit mit den im Automobilbau üblichen Dichtungsprofilen beziehungsweise den darin enthaltenen Weichmachern auf: beim Abziehen der Schutzfolie von Fensterprofilen verbleiben auf dem Gummi Rückstände des Klebers. Derartige Klebeartikel sind in EP 0 519 278 A1, JP 95-325285 A und US 5,601,917 A1 beschrieben.

Die EP 0 519 278 A1 beschreibt eine derartige Folie zum Schutz von Automobilen, die aus einem Träger besteht, der mit einem Haftklebstoff auf Kautschukbasis, insbesondere Polyisobutylen, der ein dynamisches Elastizitätsmodul von 2 x 10⁵ bis 7 x 10⁶ dyn/cm², dies entspricht in SI-Einheften einem Wert von 2 x 10⁴ bis 70 x 10⁴ Pa, bei 60 °C aufweist, beschichtet ist.

Anwendungstechnische Versuche mit einer derartigen Selbstklebefolie zeigen eine gute Verträglichkeit mit Lackoberflächen. Die Haftfestigkeit nach Wechselklimalagerung auf in der Automobilindustrie gebräuchlichen Lacken ist jedoch so gering, dass die in der Praxis geforderte Verklebungsfestigkeit nicht immer ausreichend gegeben ist.

Nachteilig ist ebenfalls das Alterungsverhalten der Polyisobutylene. Polyisobutylene sind anfällig für Alterung durch UV-Strahlung, wodurch die Kohäsion deutlich gesenkt wird. Dies führt zu Rückständen auf dem Lack nach dem Demaskieren. Aus diesem Grund ist die im Markt befindliche Klebefolie auf Basis von Polyisobutylen stark pigmentiert, der zersetzende Einfluss von Licht soll von der Klebmasse möglichst ferngehalten werden. Im Kantenbereich wird die Klebmasse jedoch direkt dem UV-Licht ausgesetzt, was dort zu starken Rückständen führt. Dies versucht man durch den Zusatz von Antioxidantien und HALS-Lichtschutzmitteln im Polyisobutylen zu vermeiden, diese Additive sind in der US 5,601,917 A1 beschrieben.

Die in DE 197 42 805 A1 beschriebene Klebmasse basiert auf einem Copolymer, dass aus mindestens zwei verschiedenen Olefinen mit 2 bis 12 Kohlenstoffatomen sowie einem Dien besteht. Bevorzugt werden Ethylen-Propylen-Dien-Terpolymeren (EPDM) verwendet. Unpolare Ethylen-Propylen-Dien-Polymere zeichnen sich durch gute Witterungs- und UV-Stabilität aus, so dass sie hervorragend als Klebmasse für Oberflächenschutzfolien geeignet sind. Die in dem Patent beschriebenen Terpolymere besitzen eine Mooney-Viskosität ML (1+4) 125 °C kleiner 50.

Untersuchungen verschiedener EPDM-Muster haben gezeigt, dass die Adhäsionsfähigkeit von EPDM-Polymeren mit steigender Mooney-Viskosität abnimmt, so haben nur Typen mit einer Mooney-Viskosität ML (1+4) 125 °C unterhalb von 30 eine ausreichende inhärente Klebrigkeit. Die Kohäsion dieser EPDM-Typen ist aber für eine Anwendung als temporäre Selbstklebmasse zu gering (analog WO 96/37568 A1), Klebmasserückstände auf der Lackoberfläche nach Bewitterung sind die Folge.

Das Beispiel 1 in DE 197 42 805 A1 beschreibt eine selbstklebende Schutzfolie mit einer Klebmasse bestehend aus einem EPDM mit einer Mooney-Viskosität ML (1+4) 125 °C von 28 sowie einem Lichtschutzmittel. Bei dieser Schutzfolie wird eine ausreichende hohe Klebkraft auf einer PU-Lackoberfläche von 0,4 N/cm erhalten.

Ein erheblicher Nachteil ist jedoch, bedingt durch das niedrige Molekulargewicht des Polymers, dass es nach Lagerung bei erhöhter Temperatur (90 °C) nicht möglich ist, diese Schutzfolie rückstandsfrei von der Lackoberfläche abzuziehen. Bereits bei leicht erhöhten Abzugstemperaturen von 40 °C versagt diese Klebmasse vollständig und spult vollflächig auf die Lackoberfläche um. Beim Abziehen mit praxisnaher Abzugsgeschwindigkeit von 20 m/min werden ein starker Anstieg der Abzugskräfte (4,3 N/cm) sowie vollflächige Masserückstände auf der Lackoberfläche beobachtet. Beim Abziehen der Schutzfolie von Prüflackoberflächen mit geringeren Abzugsgeschwindigkeit von 0,3 m/min (entsprechend AFERA 4001 beziehungsweise DIN EN 1939) werden nach Wechselklimalagerung dagegen lediglich punktuelle Masserückstände beobachtet und Klebkräfte von 2,3 N/cm gemessen.

In der Praxis werden die Fahrzeuge jedoch mit einer höheren Abzugsgeschwindigkeiten von mindestens 15 bis 30 m/min demaskiert, so dass die Messung der Klebkräfte nach AFERA 4001 beziehungsweise DIN EN 1939 nicht praxisrelevant ist. Eine Beurteilung der Eignung einer selbstklebenden Schutzfolie anhand dieser Messmethoden ist nicht möglich.

Dem starken Aufziehen versucht man in den Beispielen 2 und 4 der Beschreibung durch eine Vernetzung der Klebmasse mittels Elektronen- beziehungsweise UV-Strahlung zu begegnen. Hier wird eine Klebkraft auf Lack (Abzugsgeschwindigkeit 0,3 m/min) nach Wechselklimalagerung von 2,2 N/cm erhalten. Der entsprechende Wert nach Wechselklimalagerung und einer Abzugsgeschwindigkeit von 20 m/min liegt bei 3,4 N/cm. Durch die Vernetzung wird eine Erhöhung der Kohäsion der Klebmasse erreicht, dadurch können Massereste auf der Lackoberfläche nach dem Abziehen von der Lackoberfläche vermieden werden. Die höhere Kohäsion der Klebmasse spiegelt sich ebenfalls in der Rückstandsfreiheit beim Abziehen der Schutzfolie von lackierten Prüfblechen bei Temperaturen bis zu 60 °C wieder. Andererseits ist die Klebmasse durch die Vernetzung nun jedoch relativ hart, was zu erheblichen Deformationen der Lackoberfläche sowie zu einer unzureichenden Anfangsklebkraft von 0,2 N/cm führt.

Ein weiteres Beispiel ist eine auf Poly-α-Olefinen basierende Klebmasse (DE 197 30 193 A1). Bei dieser Oberflächenschutzfolie wird ebenfalls eine erhebliche Diskrepanz zwischen den Klebkräften bei geringer und höherer Abzugsgeschwindigkeit beobachtet. Analog DE 197 42 805 A1 werden auch hier in den Beispielen nur Polymere mit einer Mooney-Viskosität ML (1+4) 125°C unter 50 verwendet. Dadurch werden ebenfalls als Folge der geringen Kohäsion starkes Aufziehen und Masserückstände auf der Lackoberfläche beobachtet. Die Abzugskräfte liegen oberhalb von 3,2 N/cm.

Die WO 96/37568 A1 beschreibt die Verwendung von Polyhexen beziehungsweise Polyocten für einen unpolaren Haftkleber. Die in den Beispielen beschriebenen Polymere weisen wegen der geringen Kohäsion zwar ein geringes Aufziehen auf, bedingt durch das niedrige Molekulargewicht derartiger handelsüblicher Polymere führen diese Polymere aber ebenfalls zu Rückständen, die man durch Zugabe anderer Polymere, dort "cold flow restricting agent" genannt, zu vermeiden versucht. Für die Praxis sind die genannten Kleber trotzdem noch zu wenig kohäsiv, was nach Bewitterung zu Rückständen führt, insbesondere wenn das Klebeband durch Wärmeeinwirkung schrumpft.

Wesentlich UV-stabiler als Polyisobutylene sind Kleber aus hydrierten Styrol-Dien-Blockcopolymeren, wie sie in JP 08 027 444 A1 beschrieben sind. Vorteilhaft ist die hohe Kohäsion dieser Klebmassen, insbesondere bei moderaten Temperaturen der durch die Domänenbildung hervorgerufen wird.

Ein wesentlicher Nachteil solcher Blockcopolymere ist die Härte dieser Klebmassen, die durch die Styroldomänen so hoch liegt. Bedingt durch die große Härte kommt es bei dieser Art von Klebmassen zu schweren Deformationen und Änderungen des Lackes, besonders nach längerer Lagerung.

Als unpolare Klebmassenbasis für den Oberflächenschutz mit einer ausreichend hohen Kohäsion eignen sich lediglich Polymere aus den Klassen der Polyisobutylene und Butylkautschuke, der hydrierten Styrol-Block-Copolymere sowie der Ethylen/Propylen-Co- und Terpolymere.

Aufgabe der folgenden Erfindung ist es, die Vorteile des Klebmassesystems auf Basis der Styrolblockcopolymere, nämlich gute Anfangshaftung, große Verklebungssicherheit, und geringes Aufziehen, zu nutzen und eine Möglichkeit zu finden, den wesentlichen Nachteil der starken Lackdeformationen deutlich zu verringern, ohne die Stärken zu beeinträchtigen, um daraus eine Oberflächenschutzfolie insbesondere für den Transportschutz fabrikneuer Automobile zur Verfügung zu stellen.

Gelöst wird diese Aufgabe durch eine selbstklebende Schutzfolie, wie sie im Hauptanspruch niedergelegt ist. Gegenstand der Unteransprüche sind dabei vorteilhafte Weiterbildungen der selbstklebenden Schutzfolie sowie besondere Anwendungsmöglichkeiten.

Überraschend und selbst für den Fachmann unerwartet zeigt eine selbstklebende Schutzfolie mit einer ein- oder mehrlagigen, insbesondere polyolefinischen Trägerschicht und einer selbstklebenden Schicht die Eigenschaften, die diese für Oberflächenschutzanwendungen auf lackierten Oberflächen benötigt.

Die Selbstklebemasse der Schutzfolie ist folgendermaßen aufgebaut:
- 30 bis 70 Gew.-% eines oder mehrerer Elastomere auf Basis von Blockcopolymeren sowie
- 30 bis 70 Gew.-% Klebharze, wobei mindestens die Hälfte der Klebharze Flüssigklebharze mit einem Erweichungspunkt von unter 25 °C gemessen mit der Ring- und Ball-Methode sind.

Als Elastomere kommen solche auf Basis von Blockcopolymeren, enthaltend Polymerblöcke gebildet von Vinylaromaten (A-Blöcke), bevorzugt Styrol, und solchen gebildet durch Polymerisation von 1,3-Dienen (B-Blöcke), bevorzugt Butadien und Isopren oder für UVstabile Klebmassen besonders bevorzugt deren Hydrierungsprodukte, zur Anwendung. Sowohl Homo- als auch Copolymerblöcke sind erfindungsgemäß nutzbar. Resultierende Blockcopolymere können gleiche oder unterschiedliche B-Blöcke enthalten. Blockcopolymere können lineare A-B-A Struktur aufweisen, einsetzbar sind ebenfalls Blockcopolymere von radialer Gestalt sowie sternförmige und lineare Multiblockcopolymere.

Als weitere Komponenten können A-B Zweiblockcopolymere vorhanden sein. Blockcopolymere von Vinylaromaten und Isobutylen sind ebenfalls erfindungsgemäß einsetzbar. Sämtliche der vorgenannten Polymere können alleine oder im Gemisch miteinander genutzt werden.

Anstelle der Polystyrolblöcke können auch Polymerblöcke auf Basis anderer aromatenhaltiger Homo- und Copolymere (bevorzugt C-8 bis C-12 Aromaten) mit Glasübergangstemperaturen von > ca. 75 °C genutzt werden, wie zum Beispiel α-methylstyrolhaltige Aromatenblöcke.

Anstelle von Styrol-Butadien-Blockcopolymeren und Styrol-Isopren-Blockcopolymeren und deren Hydrierungsprodukten, mithin Styrol-Ethylen/Butylen-Blockcopolymere und Styrol-Ethylen/Propylen-Blockcopolymere, können erfindungsgemäß ebenfalls Blockcopolymere und deren Hydrierungsprodukte genutzt werden, welche weitere polydienhaltige Elastomerblöcke nutzen, wie zum Beispiel Copolymere mehrerer unterschiedlicher 1,3-Diene. Erfindungsgemäß nutzbar sind des weiteren funktionalisierte Blockcopolymere, wie zum Beispiel maleinsäureanhydridmodifizierte oder silanmodifizierte Styrolblockcopolymere.

Gemäß einer hervorragenden Ausführungsform der Erfindung sind die Elastomere überwiegend im Mittelblock hydriert, insbesondere aber vollständig im Mittelblock hydriert.

Als weitere Additive können typischerweise genutzt werden:
- primäre Antioxidantien, wie zum Beispiel sterisch gehinderte Phenole,
- sekundäre Antioxidantien, wie zum Beispiel Phosphite oder Thioether,
- Prozeßstabilisatoren, wie zum Beispiel C-Radikalfänger,
- Lichtschutzmittel, wie zum Beispiel UV-Absorber, sterisch gehinderte Amine,
- Verarbeitungshilfsmittel sowie
- gegebenenfalls weitere Polymere von bevorzugt elastomerer Natur. Entsprechend nutzbare Elastomere beinhalten u. a. solche auf Basis reiner Kohlenwasserstoffe, zum Beispiel gesättigte Ethylen-Propylen-Copolymere, Ethylen-Propylenkautschuk.

Die erfindungsgemäßen Klebmassen auf Basis von hydrierten Styrolblockcopolymeren sind im Vergleich zu den bekannten Klebemassen wesentlich weicher eingestellt, besitzen trotzdem aber noch eine ausreichende Kohäsion.

Da die Styrolblockcopolymere von Natur aus nicht haftklebrig sind, müssen sie durch die Zugabe von Klebharzen haftklebrig eingestellt werden.

Als Klebrigmacher für derartige Haftklebemassen werden üblicherweise wegen der besonders für KFZ-Lacke geforderten UV-Beständigkeit als Hauptkomponente hydrierte Klebharze eingesetzt.

Bevorzugt geeignet sind u. a.
- hydrierte Polymerisate des Dicyclopentadiens (zum Beispiel Escorez 5300er Serie; Exxon Chemicals),
- hydrierte Polymerisate von bevorzugt C-8 und C-9 Aromaten (zum Beispiel Regalite und Regalrez Serien; Hercules Inc. // Arkon P Serie; Arakawa), diese können durch Hydrierung von Polymerisaten aus reinen Aromatenströmen entfließen oder auch durch Hydrierung von Polymerisaten auf Basis von Gemischen unterschiedlicher Aromaten basieren,
- teilhydrierte Polymerisate von C-8 und C-9 Aromaten (zum Beispiel Regalite und Regalrez Serien; Hercules Inc. // Arkon M; Arakawa),
- hydrierte Polyterpenharze (zum Beispiel Clearon M; Yasuhara),
- hydrierte C-5/C9-Polymerisate (zum Beispiel ECR-373; Exxon Chemicals),
- aromatenmodifizierte selektiv hydrierte Dicyclopentadienderivate (zum Beispiel Escorez 5600er Serie; Exxon Chemicals) sowie
- hydrierte und teilhydrierte kolophoniumbasierende Harze (zum Beispiel Foral, Foralyn; Hercules // Hydrogral; DRT).

Für den Einsatz als Oberflächenschutzfolie, die einer UV-Belastung ausgesetzt ist, kommen hauptsächlich hydrierte Kohlenwasserstoffharze zum Einsatz.

Bei Anwendungen, bei der eine Widerstandsfähigkeit gegenüber UV-Licht nicht so entscheidend ist, können auch nicht hydrierte Klebharze allein oder als Abmischkomponenten der hydrierten Klebharze zum Einsatz kommen.

Um bei reversiblen Klebebändern die Klebkraft der Klebmassen für eine spätere Demaskierung zu reduzieren, werden häufig Klebmassen mit einem sehr hohen (über 60 %) Elastomeranteil eingesetzt. Je höher der Elastomeranteil ist, desto härter ist aber auch die Klebmasse. Eine harte Klebmasse bedingt im Allgemeinen aber recht starke Lackdeformationen, weshalb die Klebmassen weicher eingestellt werden sollten. Weichmacher im herkömmlichen Sinne, wie zum Beispiel Mineralöle führen nicht nur zu einer geringeren Härte der Klebmassen, sondern verringern auch die Kohäsion der Klebmassen, so dass häufig ein Demaskieren nur schwer möglich ist, da Klebmassereste zurückbleiben. Besonders auf lackierten Oberflächen ist die Verwendung von weichmachenden Ölen kritisch, da diese in den Lack wandern können und damit zu Deformationen führen.

Erfindungsgemäß gelöst wird das Problem erstaunlicherweise durch den Einsatz von Flüssigharzen.

Flüssigharze werden standardmäßig als Abmischkomponente zu festen Harzen zur Verringerung der Glasübergangstemperatur eingesetzt. Erfindungsgemäße Klebmassen basieren auf Styrolblockcopolymeren, die als Harzkomponente hauptsächlich oder ausschließlich Flüssigharze verwenden.

Hierdurch können die Klebmassen sehr viel weicher eingestellt werden, als herkömmliche Klebmassen auf Basis von Styrolblockcopolymeren, die hohe Kohäsion bleibt aber erhalten. Im Gegensatz zu weichmachenden Ölen neigen Flüssigharze deutlich weniger stark zur Wanderung in den Lack.

Da die Klebkräfte deutlich niedriger sind als bei festen Harzen, werden Abmischungen von Styrolblockcopolymeren nur mit flüssigen Harzen als Klebharzkomponente im Allgemeinen nicht eingesetzt. Gerade bei Oberflächenschutzfolien ist aber eine niedrige Klebkraft von Vorteil.

Als Flüssigharze sind sowohl hydrierte (zum Beispiel Regalrez 1018, Hercules // Escorez 5040, ECR 143, Exxon) und nicht hydrierte Kohlenwasserstoffharze (zum Beispiel Wingtack 10, Goodyear // Hercures A 10, Hercures C 10, Hercules) beziehungsweise hydrierte (zum Beispiel Staybelite Ester 3E, Hercules // Hydrogral M, DRT) oder nicht hydrierte Derivate des Kolophoniums (zum Beispiel Abalyn, Hercolyn D, Hercules // Bevipale 30, Arizona) geeignet. Es sollten allerdings keine Harze eingesetzt werden, die ihren niedrigen Erweichungspunkt nur der Tatsache verdanken, dass sie mit Öl abgemischt wurden, wie dieses bei den meisten flüssigen Terpenharzen der Fall ist.

Flüssigharze im Sinne der Erfindung sind Klebharze, die einen Erweichungspunkt von unter 25 °C gemessen nach der Ring- und Ball-Methode aufweisen.

Die Ring- und Ball-Methode ist die übliche Methode zur Feststellung der Erweichungspunkte. Einzelheiten können der ASTM E 28 und der DIN EN 1238 entnommen werden, auf die hiermit ausdrücklich bezug genommen wird.

Erfindungsgemäße Klebmassen enthalten 50 bis 200 Teile Harz bezogen auf das Elastomer. Dabei besteht der Harzanteil zu mindestens 50 % aus Flüssigharzen, bevorzugt zu über 75 %, besonders bevorzugt zu über 90 %, ganz besonders bevorzugt zu 100 %.

Weiter vorzugsweise handelt es sich bei den flüssigen Klebharzen um hydrierte Kohlenwasserstoffharze.

So dann hat es sich als besonders vorteilhaft erwiesen, wenn kein weichmachendes Öl eingesetzt wird.

Besonderer Vorteil der Systeme aus Styrolblockcopolymer(en) und Flüssigharz(en) ist das sehr geringe Aufziehen auf den Untergrund. Die Verklebungsfestigkeiten nach einer halben Stunde und nach einer Lagerung bei 90 °C über 3 Tage unterschiedet sich nur recht wenig. So kann bei Verwendung auf KFZ-Lacken schon kurze Zeit nach der Applikation mit dem Transport begonnen werden, ohne dass befürchtet werden muss, dass durch den Fahrtwind die Schutzfolie abgezogen wird. Andererseits ist die Klebkraft nach einer langen Lagerung nicht wesentlich angestiegen, was ein leichtes Demaskieren ermöglicht.

Ein weiterer Vorteil gegenüber anderen Systemen ist die Möglichkeit, die Klebkräfte sehr exakt einzustellen. Durch die Variation und Kombination von Elastomeren sowie den Einsatz von flüssigen Harzen als Einzelkomponente oder als Mischung sowie die Möglichkeit noch feste Klebharze in geringerer Konzentration einzubringen, ermöglicht es, die Klebkraft genau den Erfordernissen anzupassen.

Selbst beim Einsatz nur eines Elastomeren und eines Flüssigharzes ist es über das Verhältnis der beiden möglich, die Klebkräfte stark zu variieren. Man muss dabei aufpassen, einen nicht zu großen Harzanteil einzusetzen, da darunter die Kohäsion leidet.

Durch den Einsatz von nicht hydrierten Elastomeren, auch im Gemisch mit hydrierten Elastomeren können recht hohe Klebkräfte erzielt werden, allerdings nur für einen Gebrauch, bei dem UV-Stabilität der Klebmasse eine untergeordnete Rolle spielt.

Die Kohäsion der Klebmassen ist so hoch, dass selbst nach Lagerung unter hohen Temperaturen (90 °C, siehe Beispiele unten) keine Masserückstände auf dem Lack nach dem Demaskieren zu erkennen sind.

Die Schutzfolie ist nach Wechselklimalagerung rückstandsfrei bei Abzugsgeschwindigkeiten von 20 m/min mit einer Klebkraft von 2,3 bis 3,6 N/cm von lackierten Oberflächen abziehbar. Des weiteren ist ein rückstandsfreies Ablösen der Schutzfolie nach Wechselklimalagerung bis zu einer Temperatur von mindestens 50 °C möglich.

Die Klebkraft auf Stahl beträgt vorzugsweise 0,1 und 2 N/cm, sie liegt insbesondere zwischen 0,3 und 1 N/cm.

Die beschriebenen Selbstklebemassen können sowohl aus Lösung auf eine Trägerfolie aufgebracht als auch durch Coextrusion simultan mit der Trägerschicht sowie weiteren Hilfsschichten erzeugt werden.

Als Trägerschicht des Klebers dient vorzugsweise eine thermoplastische Polyolefinfolie, welche unverstreckt ist und mindestens ein Polyolefin aus der Gruppe der Polyethylene (zum Beispiel HDPE, LDPE, MDPE, LLDPE, VLLDPE, Copolymere des Ethylens mit polaren Comonomeren) und der Gruppe der Polypropylene (zum Beispiel Polypropylen-Homopolymere, Polypropylen-Random-Copolymere oder Polypropylen-Block-Copolymere) enthält.

Bevorzugt werden Mischungen verschiedener geeigneter Polyolefine verwendet, um die mechanischen und thermischen Eigenschaften sowie Glanz, Extrusionsverhalten, Verankerung des Klebers, usw. optimal einstellen zu können.

Besonders geeignet ist als Trägerschicht eine thermoplastische Polyolefinfolie, welche unverstreckt ist und mindestens ein Polypropylenblockcopolymer enthält. Der Gehalt an Polypropylenblockcopolymer macht 10 bis 95 % (w/w) der Schutzfolie aus.

Derartige Folien können auf Blasanlagen oder vorzugsweise Cast-Anlagen (T-die technology) gefertigt werden, wobei die Folie nicht durch Recken (Verstrecken) mit Reckwalzen oder Reckrahmen mono- oder biaxial verstreckt wird. Beim Blasen einer solchen Folie ist die Orientierung über Abzugsgeschwindigkeit, Aufblasverhältnis und Temperaturprofil so gering wie möglich zu halten.

Die verwendeten Polypropylenblockcopolymere (auch Impact Resistant Polypropylen genannt) sind in der Literatur in Encycl. Polym. Sci. Technol. 13, 479ff (1988) und in Ullmann's Encyclopedia of Industrial Chemistry A21, 529ff (1992) beschrieben. Beispiele für Handelsnamen sind Propathene GSF 113 (ICI), 411 GA 05 (Amoco), PMA 6100 (Montell), Stamylan P (DSM), BD 801 F (Borealis), Daplen FFC1012 (PC), Novolen 2309 L.

Derartige Blockcopolymere unterscheiden sich untereinander im wesentlichen im Schmelzindex (= MFI = MFR) und im Gehalt an Comonomer. Der Schmelzindex beeinflusst die Festigkeit der Folie und die Fließfähigkeit der Schmelze in gegenläufiger Weise. Für die Herstellung der erfindungsgemäßen Schutzfolie ist ein Schmelzindex von 0,8 bis 15 g/10 min (ISO 1133 (A/4) bei 230 °C und 2,16 kg) günstig, um den Erfordernisse nach Zähigkeit und Reißfestigkeit einerseits und Verarbeitbarkeit (Produktionsgeschwindigkeit und Gleichmäßigkeit der Dicke bei coextrudierten Folien) andererseits zu erreichen. Der bevorzugte Bereich liegt zwischen 4 und 10 g/10 min. Die Coextrusion ist bei diesem Produkt ein geeignetes Mittel, um die Haftvermittlungsschicht bei der Herstellung der Folie einzubringen.

In dem Fall, dass Trägerfolie und Kleber durch Coextrusion miteinander verbunden werden, ist die Auswahl des Schmelzindex des Polypropylenblockcopolymers wie auch der weiteren thermoplastischen Bestandteile der Folienrezeptur wichtig. Der Gehalt an Comonomer in Polypropylenblockcopolymeren bestimmt die Weichheit, Schlagzugzähigkeit und die Wärmebeständigkeit der daraus hergestellten Schutzfolie. Vorzugsweise enthält die erfindungsgemäße Schutzfolie ein Polypropylenblockcopolymer mit 3 bis 15 % (w/w) Ethylen als Comonomer. Die Schlagzugzähigkeit nach DIN 53448 sollte längs und quer mindestens 1000 mJ/mm² betragen.

Als weitere Bestandteile können zum Beispiel Polyethylen (wie zum Beispiel HDPE, LDPE, MDPE, LLDPE, VLLDPE), Copolymere des Ethylens oder Propylens mit polaren Comonomeren, Polypropylen-Homopolymere oder Polypropylen-Random-Copolymere zur Feinabstimmung der Eigenschaften (mechanische, thermische oder andere Eigenschaften wie Glanz, Haftung des Klebers, Extrusionsverhalten usw.) mitverwendet werden. Besonders vorteilhaft ist die Kombination von mehreren Polypropylenen, insbesondere unterschiedlicher Weichheit und unterschiedlicher Schmelzindices, wie zum Beispiel weichem Blockcopolymer mit PP-Homopolymer oder einer harten Blockcopolymertype, da Zähigkeit, Wärmebeständigkeit und Fließverhalten besser an die Notwendigkeiten angepasst werden können als bei alleiniger Verwendung eines Blockcopolymers. Für eine hinreichende Wärmebeständigkeit sollte der Anteil an Propylen in einer Folienschicht mindestens 65 % (w/w) betragen. Bei mehrlagigem Aufbau der Folienschicht ist dies diejenige Schicht, die für die Festigkeit verantwortlich ist und daher den höchsten Polypropylenanteil enthält (in der Regel auch die höchste Dicke aufweist) und nicht eine eventuelle Haftvermittlerschicht.

Weiter vorzugsweise kann die Folie bestehen aus einer Mischung aus
- 40 Gew.-Teilen bis 70 Gew.-Teilen Polyethylen,
- 20 Gew.-Teilen bis 40 Gew.-Teilen Polypropylen,
- 8 Gew.-Teiien bis 15 Gew.-Teiien Titandioxid,
- 0,3 Gew.-Teilen bis 0,7 Gew.-Teilen Lichtschutzstabilisatoren.

Von den 40 Gew.-Teilen bis 70 Gew.-Teilen Polyethylen in der Folie sind vorzugsweise 30 Gew.-Teile bis 50 Gew.-Teile schlagzähes Polyethylen.

Für die Trägerfolien ist eine Dicke von 20 bis 80 µm bevorzugt, gegebenenfalls einschließlich einer Haftvermittlerschicht, die zwischen der Trägerschicht und der Kleberschicht angeordnet ist.

Die Weichheit der Trägerfolie spielt bei der Verformbarkeit während der Applikation der Schutzfolie eine Rolle, die Kraft bei 10 % Dehnung sollte 25 N/15 mm, vorzugsweise 16 N/15 mm, sowohl in Längs- als auch in Querrichtung nicht überschreiten (Zugversuch nach DIN EN ISO 527-7-5). Daher sollen die Trägerfolien unverstreckt sein. Durch Recken steigt die Kraft bei 10 % Dehnung so stark an, daß die Anschmiegsamkeit nicht mehr gegeben ist.

Um der Trägerfolie die eventuell geforderte Witterungsstabilität zu geben, ist der Zusatz von Lichtschutzmitteln zu bevorzugen. Ihre Funktion besteht vorrangig in der Vermeidung der Versprödung der Trägerfolie. Derartige Lichtschutzmittel sind bei Gaechter und Müller, Taschenbuch der Kunststoff-Additive, München 1979, bei Kirk-Othmer (3.) 23, 615 - 627, bei Encycl. Polym. Sci. Technol. 14, 125 - 148 und bei Ullmann (4.) 8, 21; 15, 529, 676 beschrieben. Insbesondere HALS-Lichtschutzmittel sind für die erfindungsgemäße Schutzfolie geeignet. Die Menge des Lichtschutzmittels sollte mindestens 0,15Gew.-%, vorzugsweise mindestens 0,30 Gew.-% bezogen auf die Trägerfolie betragen.

Eine Verwendung von Antioxidantien für die Folie (zum Beispiel Irganox 1010 oder Tris-Nonylphenyl-phosphit) ist vorteilhaft, aber nicht zwingend notwendig. Weitere geeignete UV-Absorber, Lichtschutz- und Alterungsschutzmittel sind in der EP 0 763 584 A1 aufgeführt.

Eine zusätzliche Verbesserung der Lichtstabilität der Trägerfolie ist auch durch Zusatz von Titandioxid möglich. Vorteilhaft bezüglich der mechanischen Eigenschaften und der Homogenität des Weißgrades sind 5 bis 15 Gew.-% Titandioxidzusatz.

Vorzugsweise liegt die UV-Durchlässigkeit der Schutzfolie im Bereich von 290 bis 360 nm durch das Zusammenwirken von Lichtschutzmitteln und Pigmenten unter ca. 1 %, vorzugsweise unter ca. 0,1 %.

Die so hergestellten Schutzfolien weisen eine gute Haftfestigkeit auf verschiedenen in der Automobilindustrie gebräuchlichen Lacken auf, so dass sich die Schutzfolie auch unter Windeinwirkung oder unter Spannung durch Verklebung auf gewölbten Flächen nicht vom Fahrzeug ablöst. Darüber hinaus zeigt die Selbstklebemasse eine hinreichende Verklebungsfestigkeit besonders innerhalb der ersten Minuten nach Applikation, so dass die Schutzfolie bereits nach einer halben Stunde zum Beispiel einer starken Fahrtwindbelastung (bis zu 160 km/h) ausgesetzt werden kann.

Die erfindungsgemäße Schutzfolie ist somit besonders zum Montage- oder Transportschutz des frischen Abschlusslacks von Automobilen oder als Verarbeitungs- und Transportschutz von frisch lackierten Oberflächen geeignet. Die Verklebung der Schutzfolie kann dabei ohne das Auftreten jedweder Nachteile bereits eine halbe Stunde nach Ofendurchgang der lackierten Oberflächen erfolgen, obwohl zu diesem Zeitpunkt der Lack noch nicht vollständig ausgehärtet ist.

Weiterhin zeichnet sich die erfindungsgemäße Schutzfolie dadurch aus, dass sie bei Automobilen in großer Breite über Motorhaube, Dach und Kofferraum applizierbar ist und sich aufgrund ihrer Verformbarkeit planen und sogar leicht gewölbten geformten Flächen sehr gut anpasst. Damit ist der Schutz der am stärksten durch Verschmutzung gefährdeten horizontalen Flächen möglich. Aber auch schmale Bereiche wie zum Beispiel der Türvorsprung unter den Fenstern, der Einstiegsbereich oder Stoßfänger können leicht abgedeckt werden. Der Schutz der vertikalen Flächen am Fahrzeug bietet sich besonders während der Montage derselben an.

Die Schutzfolie ist beständig gegen Sonnenlicht, Hitze und Kälte, wobei die Witterungsstabilität von wenigstens einem halben Jahr gegeben ist. Auch höchste Sonneneinstrahlungsquoten, wie sie beispielsweise in Florida auftreten, führen nicht zu einem Versagen oder Ablösen der Schutzfolie. Die extrem geringe UV-Durchlässigkeit der Schutzfolie unterstützt die Resistenz des Klebers gegen Sonneneinwirkung.

Darüber hinaus gewährleistet die Festigkeit der Schutzfolie im Vergleich zur Konservierung mit Wachs einen einwandfreien Schutz gegen Verschmutzungen wie Vogelkot und Beschädigungen des gesamten Fahrzeugs durch leichte mechanische Einwirkungen. Die stoffliche oder energetische Verwertung der Schutzfolie ist möglich, insbesondere weil selbige halogenfrei ist.

Insbesondere sind die erfindungsgemäßen Schutzfolien durch ihr hohes Haftungsniveau, aber dennoch nach langer Lagerung leichter Entfembarkeit, zum Schutz des frischen Abschlusslacks von Fahrzeugen wie Automobilen und zum Schutz von frisch lackierten Fahrzeugteilen gegen Verschmutzungen und Beschädigungen während der Montage, des Transportes und der Lagerung geeignet.

Neben der schon erwähnten Eignung der erfindungsgemäßen Folien als Oberflächenschutzfolien auf Fahrzeugen können diese auch hervorragend zum Schutz von Oberflächen wie Glas, Keramik, VA-Stahl, Polycarbonat- oder Acrylglas eingesetzt werden, eben insbesondere zum Schutz von lackierten Oberflächen.

Im folgenden soll die Erfindung anhand von Beispielen erläutert werden, ohne diese damit allerdings einschränken zu wollen.

### Beispiele

Alle Beispielfolien wurden durch Beschichtung eines coronavorbehandelten Polyolefinträgers mit den toluolischen Lösungen der einzelnen Kleberrezepturen hergestellt. Der Träger war 60 µm dick und setzte sich wie folgt zusammen:
- 60 Teile Polypropylen-Blockcopolymer Daplen FFC 2012 (PCD)
- 25 Teile Polypropylenhomopolymer Daplen KFC 201 (PCD)
- 6,3 Teile LDPE Lupolen 1840 H (Elenac)
- 8,4 Teile Titandioxid
- 0,3 Teile UV-Lichtschutzmittel Tinuvin 770 (Ciba-Geigy)

Die Schichtdicke des Haftkleberauftrages betrug nach dem Trocknen jeweils 15 µm, so dass die Muster eine Gesamtdicke von 85 µm aufwiesen.

In Tabelle 1 oben sind Beispielrezepturen gemäß den Patentansprüchen und Gegenbeispiele aufgeführt.

Die Muster wurden streifenweise auf 1K-PU-lackierte (Duraclear II, BASF) Musterbleche verklebt. Die Beurteilung der Muster erfolgte nach folgenden Kriterien:
1. Abzugskraft von Lack nach 30 min bei Raumtemperatur
2. Abzugskraft von Lack nach dreitägiger Lagerung bei 90 °C
3. Anwendungstechnische Beurteilung der Lackveränderungen

### Ermittlung der Beurteilungskriterien

### Abzugskraft von Lack nach 30 min bei Raumtemperatur und Abzugskraft von Lack nach dreitägiger Lagerung bei 90 °C

Die Klebkräfte wurden bei einem Abzugswinkel von 180° nach AFERA 4001 bestimmt. Hierbei wurden Stahlplatten sowie Prüfbleche, die mit dem PU-Lack lackiert sind, als Prüfuntergrund verwendet. In einer abgewandelten Klebkraftprüfung wurden die 15 mm breiten Teststreifen mit einer Geschwindigkeit von 20 m/min in einem 180° Winkel, bei einer Temperatur von 23 °C ± 1 °C und einer relativen Luftfeuchte von 50 % ± 5% von einem mit PU-Lack lackierten Blech abgezogen.

### Anwendungstechnisches Urteil über die Veränderungen des KFZ-Lackes

Das anwendungstechnische Urteil über die Veränderungen des KFZ-Lackes spricht eine Empfehlung aus, ob die Folie die anwendungstechnischen Anforderungen an eine gute Lackverträglichkeit zufriedenstellend erfüllt.

**Tabelle 1: Abzugskräfte von Lack nach unterschiedlichen Lagerungsbedingungen.**

| Musterrezepturen in Gewichtsteilen | | | | | | | | | |
|---|---|---|---|---|---|---|---|---|---|
| Abzugskräfte von Lack in N/cm | | | | | | | | | |
| Komp. | Beispielnummer | 1 | 2 | 3 | 4 | 5 | 6 | 7 | 8 |
| | Kraton G 1657 ¹⁾ | 100 | 100 | 100 | 50 | 100 | 100 | 100 | 100 |
| | Kraton D 1102 ²⁾ | | | | 50 | | | | |
| | Regalite R 1100 ³⁾ | | | | | | 30 | 100 | 100 |
| | Regalrez 1018 ⁴⁾ | 100 | 150 | | 100 | 50 | 70 | | |
| | Wingtack 10 ⁵⁾ | | | 100 | | 50 | | | |
| | Ondina G 41 ⁶⁾ | | | | | | | | 20 |
| | Irganox 1010 ⁷⁾ | 0,5 | 0,5 | 0,5 | 0,5 | 0,5 | 0,5 | 0,5 | 0,5 |
| | | | | | | | | | |
| | Abzugskraft frisch ⁸⁾ | 2,0 | 2,4 | 1,7 | 2,4 | 2,1 | 2,6 | 1,8 | 1,4 |
| | Abzugskraft final ⁹⁾ | 2,4 | 2,7 | 2,3 | 3,1 | 2,4 | 3,2 | 2,7 | 2,0 |
| | Anwendungstechnische Beurteilung der Lackveränderungen | i.O. | i.O. | i.O. | i.O. | i.O. | i.O. | n.i.O. | n.i.O. |

| | | | | | | | | | |
|---|---|---|---|---|---|---|---|---|---|
| Abk.: i.O. = in Ordnung, n.i.O. = nicht in Ordnung ¹⁾ SEBS mit 13 % Blockpolystyrolgehalt der Fa. Kraton Polymers ²⁾ SBS mit 30 % Blockpolystyrolgehalt der Fa. Kraton Polymers ³⁾ hydriertes KW-Harz mit einem Erweichungspunkt von 99 °C der Fa. Hercules ⁴⁾ flüssiges hydriertes KW-Harz der Fa. Hercules ⁵⁾ flüssiges nicht hydriertes Kohlenwasserstoffharz der Fa. Goodyear. ⁶⁾ aliphatenreiches Weichöl der Fa. Shell ⁷⁾ Alterungsschutzmittel der Fa. Ciba-Geigy ⁸⁾ Abzugskraft von Lack nach 30 min Verklebungszeit bei Raumtemperatur. ⁹⁾ Abzugskraft von Lack nach 3 Tagen Verklebungszeit bei 90 °C. | | | | | | | | | |

### Diskussion

Alle Beispiele zeigen eine gute Anfangshaftung nach 30 min Lagerung bei Raumtemperatur, wobei "gut" in Praxistests als ca. ≥ 0,8 N/cm eingestuft wird. Auch die Klebkraft nach 3 Tagen Lagerung bei 90 °C ist nur wenig höher als die Anfangshaftung. Das Klebkraftniveau kann aber leicht wie an den ersten beiden Beispielen gezeigt auf die besonderen Anforderungen eingestellt werden.

Da die Klebkräfte auf verschiedenen Lacken unterschiedlich sind, eröffnet sich so die Möglichkeit, auch für unterschiedliche Haftgründe jeweils ein geeignetes maßgeschneidertes Klebkraftprofil einzustellen.

Im Gegensatz zu den ersten Mustern werden die letzten beiden in der anwendungstechnischen Prüfung als nicht in Ordnung eingestuft, da die Veränderungen des Lacks zu stark sind.

## Patentansprüche

1. Selbstklebende Schutzfolie für Oberflächenschutzanwendungen für lackierte Oberflächen mit einer ein- oder mehrlagigen, insbesondere polyolefinischen Trägerschicht und einer selbstklebenden Schicht, **dadurch gekennzeichnet, dass**
die Selbstklebemasse folgendermaßen aufgebaut ist:
| | |
|---|---|
| 30 bis 70 Gew.-% | eines oder mehrerer Elastomere auf Basis von Blockcopolymeren, enthaltend Polymerblöcke gebildet von Vinylaromaten (A-Blöcke), bevorzugt Styrol, und solchen gebildet durch Polymerisation von 1,3-Dienen (B-Blöcke), bevorzugt Butadien und Isopren beziehungsweise deren Hydrierungsprodukten, sowie |
| 30 bis 70 Gew.-% | Klebharze, wobei mindestens die Hälfte der Klebharze Flüssigklebharze mit einem Erweichungspunkt von unter 25 °C gemessen mit der Ring- und Ball-Methode sind. |

2. Selbstklebende Schutzfolie nach Anspruch 1, **dadurch gekennzeichnet, dass** die Elastomere überwiegend im Mittelblock hydriert sind, insbesondere vollständig im Mittelblock hydriert sind.

3. Selbstklebende Schutzfolie nach den Ansprüchen 1 oder 2, **dadurch gekennzeichnet, dass** der Anteil an Flüssigharzen am gesamten Harzanteil über 90 % beträgt insbesondere 100 %.

4. Selbstklebende Schutzfolie nach einem der Ansprüche 1 bis 3, **dadurch gekennzeichnet, dass** es sich bei den flüssigen Klebharzen um hydrierte Kohlenwasserstoffharze handelt.

5. Selbstklebende Schutzfolie nach mindestens einem der vorhergehenden Ansprüche, **dadurch gekennzeichnet, dass** kein weichmachendes Öl eingesetzt wird.

6. Selbstklebende Schutzfolie nach mindestens einem der vorhergehenden Ansprüche, **dadurch gekennzeichnet, dass** die Dicke der Trägerschicht zwischen 20 und 80 µm beträgt, gegebenenfalls einschließlich einer Haftvermittlerschicht, die zwischen der Trägerschicht und der Kleberschicht angeordnet ist.

7. Selbstklebende Schutzfolie nach mindestens einem der vorhergehenden Ansprüche, **dadurch gekennzeichnet, dass** die Trägerschicht mindestens ein Lichtschutzmittel in einer Menge von mindestens 0,15 Gew.-% enthält.

8. Selbstklebende Schutzfolie nach mindestens einem der vorhergehenden Ansprüche, **dadurch gekennzeichnet, dass** die UV-Durchlässigkeit der Schutzfolie im Wellenlängenbereich von 290 bis 360 nm unter 1 % liegt.

9. Verfahren zur Herstellung einer selbstklebenden Schutzfolie nach zumindest einem der vorhergehenden Ansprüche durch simultane Coextrusion von Kleberschicht, Trägerschicht sowie weiteren Hilfsschichten.

10. Verwendung einer Schutzfolie nach zumindest einem der vorhergehenden Ansprüche auf frisch lackierten Oberflächen von Automobilen oder Automobilteilen als Montage- oder Transportschutz.

11. Verwendung einer Schutzfolie nach zumindest einem der vorhergehenden Ansprüche zum Schutz von empfindlichen Lack-, Metall-, Kunststoff- oder Glasoberflächen.

## Claims

1. Self-adhesive protection film for surface protection applications for painted surfaces, having a single-ply or multi-ply backing layer, especially a polyolefinic backing layer, and a self-adhesive layer, **characterized in that**
the self-adhesive composition is constructed as follows:
| | |
|---|---|
| 30 to 70% by weight | of one or more elastomers based on block copolymers, including polymer blocks formed from vinylaromatics (A blocks), preferably styrene, and blocks formed by polymerizing 1,3-dienes (B blocks), preferably butadiene and isoprene and/or their hydrogenation products, and also |
| 30 to 70% by weight | of tackifier resins, at least half of the tackifier resins being liquid tackifier resins with a softening point of below 25°C, measured using the ring-and-ball method. |

2. Self-adhesive protection film according to claim 1, **characterized in that** the elastomers are hydrogenated predominantly in the middle block, and in particular are hydrogenated completely in the middle block.

3. Self-adhesive protection film according to claims 1 or 2, **characterized in that** the fraction of liquid resins in the total resin fraction is above 90%, in particular 100%.

4. Self-adhesive protection film according to one of claims 1 to 3, **characterized in that** the liquid tackifier resins are hydrogenated hydrocarbon resins.

5. Self-adhesive protection film according to at least one of the preceding claims, **characterized in that** no plasticizing oil is used.

6. Self-adhesive protection film according to at least one of the preceding claims, **characterized in that** the thickness of the backing layer is between 20 and 80 µm, including where appropriate an adhesion promoter layer, disposed between the backing layer and the adhesive layer.

7. Self-adhesive protection film according to at least one of the preceding claims, **characterized in that** the backing layer includes at least one light stabilizer in an amount of at least 0.15% by weight.

8. Self-adhesive protection film according to at least one of the preceding claims, **characterized in that** the UV transmittance of the protection film in the wavelength range from 290 to 360 nm is below 1%.

9. Method of producing a self-adhesive protection film according to at least one of the preceding claims, by simultaneous coextrusion of adhesive layer, backing layer and further, auxiliary layers.

10. Use of a protection film according to at least one of the preceding claims on freshly painted surfaces of automobiles or automobile parts, as assembly protection or transit protection.

11. Use of a protection film according to at least one of the preceding claims for protecting sensitive paint, metal, plastic or glass surfaces.

## Revendications

1. Feuille de protection autoadhésive pour des applications de protection de surface pour des surfaces peintes, qui présente une couche de support en particulier polyoléfinique, simple ou multiple, et une couche autoadhésive, **caractérisée en ce que** la pâte autoadhésive est constituée de la façon suivante :
- de 30 à 70 % en poids d'un ou plusieurs élastomères à base de copolymères séquencés, qui contiennent des blocs polymères formés d'aromates de vinyle (blocs A), de préférence de styrène, et des blocs formés par polymérisation de 1,3-diènes (blocs B), de préférence le butadiène et l'isoprène ainsi que leurs produits d'hydrogénation, ainsi que :
- de 30 à 70 % en poids de résines adhésives, au moins la moitié des résines adhésives étant des résines adhésives liquides possédant un point d'amollissement inférieur à 25° C, mesuré avec la méthode d'anneau et bille.

2. Feuille de protection autoadhésive selon la revendication 1, **caractérisée en ce que** les élastomères sont hydrogénés principalement dans le bloc central et en particulier sont hydrogénés complètement dans le bloc central.

3. Feuille de protection autoadhésive selon les revendications 1 ou 2, **caractérisée en ce que** la teneur en résines liquides de la teneur totale de résine est plus de 90 %, en particulier 100 %.

4. Feuille de protection autoadhésive selon l'une quelconque des revendications 1 à 3, **caractérisée en ce que** les résines adhésives liquides sont des résines d'hydrocarbure hydrogénées.

5. Feuille de protection autoadhésive selon au moins l'une quelconque des revendications précédentes, **caractérisée en ce que** l'on n'utilise pas d'huile plastifiante.

6. Feuille de protection autoadhésive selon au moins l'une quelconque des revendications précédentes, **caractérisée en ce que** l'épaisseur de la couche de support est comprise entre 20 et 80 µm, éventuellement en y incluant une couche de renforcement de l'adhérence disposée entre la couche de support et la couche d'adhésif.

7. Feuille de protection autoadhésive selon au moins l'une quelconque des revendications précédentes, **caractérisée en ce que** la couche de support contient au moins un agent de protection contre la lumière en quantité d'au moins 0,15 % en poids.

8. Feuille de protection autoadhésive selon au moins l'une quelconque des revendications précédentes, **caractérisée en ce que** la transparence de la feuille de protection aux UV dans la plage de longueurs d'onde de 290 à 360 nm est inférieure à 1 %.

9. Procédé de production d'une feuille de protection autoadhésive selon au moins l'une des revendications précédentes par co-extrusion simultanée d'une couche adhésive, d'une couche de support ainsi que de couches auxiliaires supplémentaires.

10. Utilisation d'une feuille de protection selon au moins l'une des revendications précédentes sur des surfaces fraîchement peintes d'automobiles ou de pièces d'automobiles en tant que protection pour le montage ou le transport.

11. Utilisation d'une feuille de protection selon au moins l'une des revendications précédentes pour la protection de surfaces sensibles de peinture, de métal, de plastique ou de verre.
